# EUROPEAN PATENT APPLICATION

(11) **EP 4 657 596 A1**
(43) Date of publication of application: **03.12.2025**
(21) Application number: 23918154.8
(22) Date of filing: 12.04.2023
(51) Int. Cl.: H01M 10/0587

(54) **INTEGRATED BATTERY CELL PRE-LITHIATION APPARATUS AND METHOD**

(30) Priority: 29.01.2023 CN 202310080129; 29.01.2023 CN 202320083482 U
(71) Applicant: China Energy Lithium Co., Ltd., Tianjin 300457 (CN)
(72) Inventor: SUN, Zhaoyong, Tianjin 300457 (CN); QI, Dazhi, Tianjin 300457 (CN); CHEN, Qiang, Tianjin 300457 (CN); KONG, Deyu, Tianjin 300457 (CN); HUAN, Qingna, Tianjin 300457 (CN); WANG, Weizhou, Tianjin 300457 (CN)
(74) Representative: Carpmaels & Ransford LLP
(86) International application number: PCT/CN2023/087817
(87) International publication number: WO 2024/156151

(57) **Abstract**

The present invention provides an integrated battery cell pre-lithiation apparatus and method, which use a lithium source half electrode to pre-lithiate the battery cell in batch through an electrochemical method. The pre-lithiation apparatus comprises a pre-lithiation working box and an external power supply, wherein the pre-lithiation working box comprises a box body; a battery cell fixing element and a lithium source half electrode disposed within the box body; and a negative electrode current collector and a lithium source current collector, wherein the negative electrode current collector comprises a negative electrode busbar configured for being communicated with negative electrodes of a plurality of battery cells simultaneously, and the lithium source current collector is configured for being communicated with the lithium source half electrode. The negative electrode of the battery cell and the lithium source half electrode are connected to the external power supply via an electrical circuit, and provide an electrochemical lithium supplement under the action of the power supply. The pre-lithiation apparatus of the present application is easy to operate, and can perform pre-lithiation in batch. As compared to traditional pre-lithiation, the electrochemical pre-lithiation of the pre-lithiation apparatus of the present application results in better consistency and uniformity of the negative electrode pre-lithiation, better pre-lithiation effect, and lower requirements on the lithium source.

## Description

### Technical Field

The present application relates to battery technical field, and in particular an integrated battery cell pre-lithiation apparatus and method.

### Background

With the development of the society, the application of electrochemical energy storage devices has received more and more attention. Due to the limitation of the material level, the low first cycle efficiency of the cell of the electrochemical energy storage devices has gradually become apparent. Thus, there is an urgent need for developing a technology for supplementing the low first cycle efficiency. The emergence of pre-lithiation (lithium supplement) technologies has solved this problem. The main lithium supplementing means at present comprises a positive electrode lithium supplement, a negative electrode lithium supplement, a chemical lithium supplement, and an electrochemical lithium supplement. Where, the positive electrode lithium supplement mainly comprises using lithium-containing compounds as an additive, but the addition of those substances will introduce inactive ingredients, lowering the energy density. The negative electrode lithium supplement mainly comprises lithium supplement with lithium powder and lithium supplement with ultra-thin lithium foil. Lithium powder has a large particle size (D50 ≥ 40 µm), and belongs to explosive dust which is highly hazardous. Lithium supplement with lithium foil has high requirements on the ultra-thin lithium foil process, and is difficult to produce for general companies. Conventional chemical lithium supplement and electrochemical lithium supplement are only directed to lithium supplement for a single electrode sheet, which is inefficient, and cannot be applied to batch pre-lithiation and large scale applications. Therefore, there is a need for developing a large scale and simplified lithium supplementing method.

### Summary

The present application provides a simple and effective apparatus and method for batch pre-lithiation, which can effectively overcome the drawbacks present in existing pre-lithiation processes.

The object of the present application may be achieved through the following technical solutions.

In an aspect, the present application provides a pre-lithiation apparatus comprising a pre-lithiation working box and an external power supply,
wherein the pre-lithiation working box comprises:
a box body;
a battery cell fixing element and a lithium source half electrode disposed within the box body; and
a negative electrode current collector and a lithium source current collector, wherein the negative electrode current collector comprises a negative electrode busbar configured for being communicated with negative electrodes of a plurality of battery cells simultaneously, and the lithium source current collector is configured for being communicated with the lithium source half electrode,
wherein the battery cell fixing element comprises a plurality of battery cell fixing rings for fixing the plurality of battery cells, or a plurality of tab fixing elements, wherein each of the tab fixing elements is configured for fixing a negative electrode tab of each of the battery cells, and the plurality of tab fixing elements are communicated with the negative electrode busbar, and
wherein the power supply has a positive electrode connected to the negative electrode current collector, and a negative electrode connected to the lithium source current collector.

The pre-lithiation apparatus of the present application is suitable for pre-lithiation of a cylindrical battery cell and a polygonal battery cell (such as a rectangular battery cell) and pre-lithiation of a laminated battery cell, and can achieve simultaneous pre-lithiation of a plurality of battery cells. The number of the battery cells depends on the size of the pre-lithiation working box, and the pre-lithiation working box is inexpensive and can be scaled up according to practical requirements.

Optionally, the battery cell comprises a cylindrical battery cell, a wound rectangular battery cell, or a laminated battery cell, wherein the cylindrical battery cell or the wound rectangular battery cell comprises an electrode post on the negative electrode side, and the battery cell can be communicated with the negative electrode busbar via the electrode post after the battery cell is fixed with the battery cell fixing element; and the laminated battery cell comprises a negative electrode tab on the negative electrode side, and the laminated battery cell can be fixed by fixing the negative electrode tab with the tab fixing element.

Optionally, the battery cell is a wound cylindrical battery cell, which is spun and shaped at its negative electrode side, and the negative electrode current collector and the electrode post are welded thereto. Such battery cell is preferably a 18650, 21700 or 46800 battery cell.

Optionally, the battery cell is a wound or laminated polygonal battery cell with a side number greater than or equal to 4, and its negative electrode is led out by welding a tab.

Optionally, the battery cell fixing element is a plate-like element fixed in the box body, wherein the plate-like element comprises a plurality of circular rings or polygonal rings penetrating the plate-like element in a thickness direction to allow the plurality of battery cells and the lithium source half electrode to be placed.

Optionally, the lithium source half electrode is composed of a metal lithium rod or metal lithium piece and a current collector, wherein the metal lithium has a purity of 99.99% or more.

Optionally, the box body further has a bottom slot at its bottom for inserting the lithium source half electrode.

Optionally, the pre-lithiation apparatus further comprises a liquid reservoir for providing an electrolyte solution to the pre-lithiation working box.

Optionally, the pre-lithiation working box further comprises a liquid injection port, a liquid discharge port and a liquid level sensor.

Optionally, the pre-lithiation apparatus further comprises a liquid reservoir for providing an electrolyte solution to the pre-lithiation working box.

Optionally, the integrated battery cell pre-lithiation apparatus further comprises an environment control device for providing a vacuum environment or an inert gas atmosphere protecting environment inside the box body.

Optionally, the environment control device is a vacuum device or a gas replacement device, which can provide a vacuum environment or an inert gas atmosphere for the box body. The inert gas atmosphere is preferably an argon atmosphere.

Optionally, the pre-lithiation apparatus further comprises a control system for controlling at least one of a power supply voltage, a current, a pre-lithiation time, a liquid level in the pre-lithiation working box, the environment control device, and an environmental parameter in the pre-lithiation working box.

Optionally, the pre-lithiation working box is a sealed box body which can be opened and closed or has a removable side.

Optionally, the negative electrode busbar is disposed within the box body, and the pre-lithiation working box is provided with an electrode post penetrating a top cover of the box body, and when the top cover is closed, the electrode post is communicated with the negative electrode busbar; or the negative electrode busbar is disposed outside of the box body, and is communicated with the negative electrode of the battery cell via an electrode post penetrating the box body.

Optionally, the negative electrode busbar is disposed above the negative electrodes of the plurality of battery cells in the box body, and may be fixed below the top cover on the top of the box body, for example. Preferably, the negative electrode busbar is automatically controlled, such that when it is detected that the battery cells are in place, the negative electrode busbar may be controlled to open or close through electrical signals to carry out the action of releasing or clamping the electrode posts of the plurality of battery cells.

Optionally, the tab fixing element is at least one of a clip, a jack catch, a clamping jaw and a fixing plate.

In another aspect, the present application provides a method for collectively pre-lithiating battery cells by using the pre-lithiation apparatus as described above, comprising:
mounting a plurality of battery cells onto the battery cell fixing element, such that a negative electrode of each of the battery cells is connected to the negative electrode busbar;
adding an electrolyte solution through an electrolyte solution injection port to an extent that the battery cells and the lithium source half electrode are all soaked by the electrolyte solution; and
connecting the external power supply and controlling a pre-lithiation amount by controlling a current or a time.

Optionally, the electrolyte solution is a conventional electrolyte solution for lithium batteries, and preferably a mixture of a carbonate solvent and lithium hexafluorophosphate.

Optionally, the control system controls the discharge of the half cell composed of the negative electrode of the battery cell and the lithium source half electrode at a small current, preferably a current of 0.2 C.

In yet another aspect, the present application provides a lithium battery comprising a pre-lithiated battery cell obtained by the method as described above.

The technical solutions of the present application at least have one of the following advantages.

A plurality of battery cells can be collectively pre-lithiated at the same time, resulting in high production efficiency and low cost. As compared to traditional pre-lithiation apparatuses, the pre-lithiation apparatus of the present application provides better consistency and uniformity of the negative electrode pre-lithiation.

The integrated battery cell pre-lithiated by the pre-lithiation apparatus of the present application can be directly taken out and packaged into a battery after simple processing, which has a simple process.

The present application has low requirements on the lithium source half electrode, and thus has obvious advantages in processability and cost.

### Brief Description of Drawings

Fig. 1 is a schematic diagram of an integrated battery cell pre-lithiation apparatus of the present application.
Fig. 2 is a schematic structure diagram of a cylindrical battery cell pre-lithiation working box.
Fig. 3 is a schematic structure diagram of a laminated battery cell pre-lithiation working box.

### Reference Number List:

10: pre-lithiation working box;
11: box body;
12: battery cell fixing element;
13: negative electrode busbar;
14: negative electrode current collecting post;
15: lithium source current collecting post;
16: liquid injection port;
17: liquid discharge port;
18: liquid level sensor;
19: environment control port;
20: battery cell;
21: negative electrode tab;
22: positive electrode tab;
30: lithium source half electrode;
31: bottom slot;
32: tab fixing element;
40: power supply;
41: power supply positive electrode;
42: power supply negative electrode;
50: environment control device;
60: liquid reservoir;
61: liquid injection pump;
70: control system;
71: control screen.

### Detailed Description

Some specific embodiments of the present application are described below with reference to the drawings. It will be appreciated that those skilled in the art can envisage various other embodiments and modify them based on the teachings of the present application, without departing form the scope or spirit of the present application. Therefore, the specific embodiments below are not intended to be limiting.

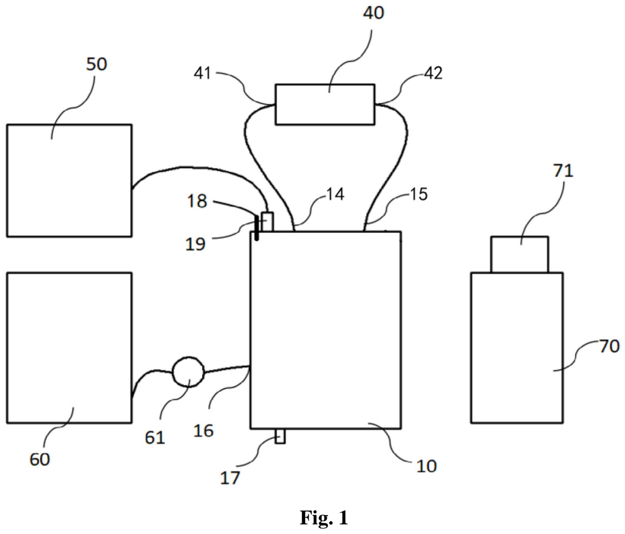

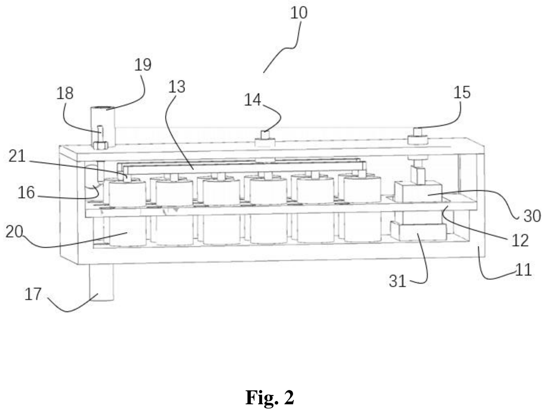

Fig. 1 shows a schematic diagram of a specific example of an integrated battery cell pre-lithiation apparatus of the present application. Fig. 2 shows a specific example of a pre-lithiation working box in the integrated battery cell pre-lithiation apparatus.

With reference to Fig. 1 and Fig. 2, the integrated battery cell pre-lithiation apparatus comprises:
a plurality of cylindrical integrated battery cells 20, each of which comprises a negative electrode post and a positive electrode tab;
a lithium source half electrode 30 composed of metal lithium and a current collector;
a pre-lithiation working box 10 comprising a box body 11, a battery cell fixing element 12, a negative electrode busbar 13, a negative electrode current collecting post 14, a lithium source current collecting post 15, a liquid injection port 16, a liquid discharge port 17, a liquid level sensor 18 and an environment control port 19; wherein the box body 11 is a sealable box body; the liquid injection port 16 is configured for injecting an electrolyte solution into the pre-lithiation working box 10; the liquid discharge port 17 is configured for discharging the used electrolyte solution from the box body after the pre-lithiation is completed; the battery cell fixing element 12 is a metal element (such as an aluminum element) having a plurality of circular or square fixing grooves (or holes) penetrating the element, a portion of which is configured for fixing the cylindrical integrated battery cells 20, and another portion (at least one) of which is configured for fixing the lithium source half electrode 30; and the bottom of the lithium source half electrode 30 is further fixed through the bottom slot 31;
a power supply 40 having a power supply positive electrode 41 and a power supply negative electrode 42; wherein the positive electrode 41 of the power supply is communicated with the negative electrode current collecting post 14 through a wire, and the negative electrode 42 of the power supply is communicated with the lithium source current collecting post 15 through a wire;
an environment control device 50, wherein the environment control device 50 in the present embodiment is a vacuum device connected to the environment control port 19 on the pre-lithiation working box 10, and the environment control device 50 can place the pre-lithiation working box 10 into a vacuum state, preferably with a vacuum degree of less than 100 Pa; in some other embodiments, the environment control device 50 may also be a gas replacement device, which can maintain an inert gas atmosphere in the pre-lithiation working box 10 by replacing the gas in the pre-lithiation working box 10;
a liquid reservoir 60 for storing an electrolyte solution, which is connected to the liquid injection port 16 on the pre-lithiation working box 10 through a liquid injection pump 61, and the operation of the liquid injection pump 61 can pump the electrolyte solution in the liquid reservoir 60 into the pre-lithiation working box 10; and
a control system 70 for controlling relevant parameters in various processes, wherein the control system 70 further comprises a control screen 71, and relevant parameters to be controlled, the pre-lithiation time and so on may be input and set through the control screen 71.

In particular operation, when it is ensured that there is no electrolyte solution in the pre-lithiation working box 10 (if there is any electrolyte solution, the electrolyte solution will be drained through the liquid discharge port 17), the pre-lithiation working box 10 is firstly opened; the lithium source half electrode 30 is passed through the battery cell fixing element 12 and fixed in the bottom slot, and the cylindrical battery cell 20 to be pre-lithiated is passed through the battery cell fixing element 12 and placed on the floor. The top cover with the current collecting post is put on. At this time, the current collecting post 14 is connected with the negative electrode busbar 13, and the negative electrode busbar 13 clamps the electrode posts of the plurality of battery cells with the clips at the lower end, and the lithium source current collecting post 15 is connected with the electrode post of the lithium source half electrode.

The pre-lithiation working box 10 is closed. The environment control device 50 maintains a predetermined operating environment in the pre-lithiation working box 10. The electrolyte solution is pumped into the pre-lithiation working box 10 through the liquid injection pump 61 until the predetermined value is reached (generally, the liquid level of the electrolyte solution reaches the position of the negative electrode post 21 of the integrated battery cell 20). After relevant pre-lithiation parameters are set on the control screen 71, the control system 70 controls the power supply 40 to start to begin the pre-lithiation on a plurality of integrated battery cells 20. After the pre-lithiation is completed, the electrolyte solution in the pre-lithiation working box 10 is discharged through the liquid discharge port 17, the box body 11 is opened, and the integrated battery cells 20 pre-lithiated in the pre-lithiation working box 10 are taken out and packaged into a battery after relevant processing.

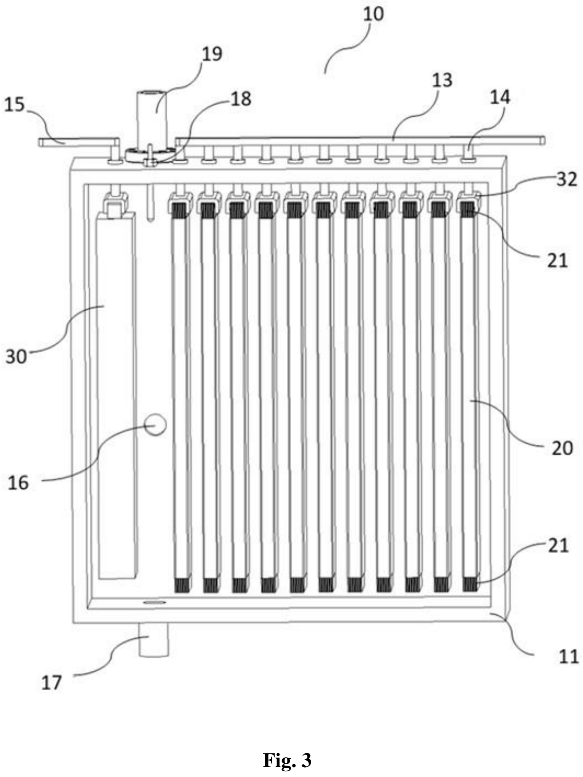

Fig. 3 shows another specific example of a pre-lithiation working box in the integrated battery cell pre-lithiation apparatus, which differs from the one in Fig. 2 in that the battery cell is a laminated battery cell and the battery cell is fixed with a tab fixing element,

Specifically, the integrated battery cell pre-lithiation apparatus comprises:
an integrated battery cell 20 comprising a negative electrode tab 21 and a positive electrode tab 22;
a lithium source half electrode 30 composed of metal lithium and a current collector;
a pre-lithiation working box 10 comprising a box body 11, a tab fixing element 32, a negative electrode busbar 13, a negative electrode current collecting post 14, a lithium source busbar 15, a liquid injection port 16, a liquid discharge port 17, a liquid level sensor 18 and an environment control port 19, wherein the box body 11 is a sealable box body; the liquid injection port 16 is configured for injecting an electrolyte solution into the pre-lithiation working box 10; the liquid discharge port 17 is configured for discharging the used electrolyte solution from the box body after the pre-lithiation is completed; the tab fixing element 32 comprises a plurality of tab fixing elements, a portion of which is configured for fixing the negative electrode tab 21 of the integrated battery cell 20, and another portion (at least one) of which is configured for fixing the tab of the lithium source half electrode 30; the tab fixing element 32 for fixing the lithium source half electrode 30 is communicated with the lithium source busbar 15 via a corresponding electrode post, and the tab fixing element 32 for fixing the negative electrode tab 21 of the integrated battery cell 20 is communicated with the negative electrode busbar 13 via a corresponding negative electrode current collecting post 14; and
a power supply 40 having a power supply positive electrode 41 and a power supply negative electrode 42; wherein the positive electrode 41 of the power supply is communicated with the negative electrode busbar 14 through a wire, and the negative electrode 42 of the power supply is communicated with the lithium source busbar 15 through a wire.

It should be appreciated that the above embodiments are only some preferred embodiments of the present application, but not intended to limit the present application. Any variations, equivalents, modifications and the like made within the spirit and principle of the present application should be encompassed within the protection scope of the present application.

## Claims

1. A pre-lithiation apparatus, **characterized in that** the pre-lithiation apparatus comprises a pre-lithiation working box and an external power supply,
wherein the pre-lithiation working box comprises:
a box body;
a battery cell fixing element and a lithium source half electrode disposed within the box body; and
a negative electrode current collector and a lithium source current collector, wherein the negative electrode current collector comprises a negative electrode busbar configured for being communicated with negative electrodes of a plurality of battery cells simultaneously, and the lithium source current collector is configured for being communicated with the lithium source half electrode,
wherein the battery cell fixing element comprises a plurality of battery cell fixing rings for fixing the plurality of battery cells, or a plurality of tab fixing elements, wherein each of the tab fixing elements is configured for fixing a negative electrode tab of each of the battery cells, and the plurality of tab fixing elements are communicated with the negative electrode busbar, and
wherein a positive electrode of the power supply is connected to the negative electrode current collector, and a negative electrode of the power supply is connected to the lithium source current collector.

2. The pre-lithiation apparatus according to claim 1, **characterized in that** the battery cell comprises a cylindrical battery cell, a wound rectangular battery cell, or a laminated battery cell, wherein the cylindrical battery cell or the wound rectangular battery cell comprises an electrode post on its negative electrode side, and the battery cell can be communicated with the negative electrode busbar via the electrode post after the battery cell is fixed with the battery cell fixing element; and the laminated battery cell comprises a negative electrode tab on its negative electrode side, and the laminated battery cell can be fixed by fixing the negative electrode tab with the tab fixing element.

3. The pre-lithiation apparatus according to claim 1, **characterized in that** the battery cell fixing element is a plate-like element fixed in the box body, wherein the plate-like element has a plurality of circular rings or polygonal rings penetrating the plate-like element in a thickness direction to allow the plurality of battery cells and the lithium source half electrode to be placed.

4. The pre-lithiation apparatus according to claim 1, **characterized in that** the lithium source half electrode is composed of a metal lithium rod or metal lithium piece and a current collector, wherein the metal lithium has a purity of 99.99% or more.

5. The pre-lithiation apparatus according to claim 1, **characterized in that** the box body further comprises a bottom slot at its bottom for inserting the lithium source half electrode.

6. The pre-lithiation apparatus according to claim 1, **characterized in that** the pre-lithiation apparatus further comprises a liquid reservoir for providing an electrolyte solution to the pre-lithiation working box.

7. The pre-lithiation apparatus according to claim 1, **characterized in that** the pre-lithiation working box further comprises a liquid injection port, a liquid discharge port and a liquid level sensor.

8. The pre-lithiation apparatus according to claim 1, **characterized in that** the pre-lithiation apparatus further comprises an environment control device for providing a vacuum environment or an inert gas atmosphere protecting environment inside the box body.

9. The pre-lithiation apparatus according to claim 1, **characterized in that** the pre-lithiation apparatus further comprises a control system for controlling at least one of a power supply voltage, a current, a pre-lithiation time, a liquid level in the pre-lithiation working box, an environment control device, and an environmental parameter in the pre-lithiation working box.

10. The pre-lithiation apparatus according to claim 1, **characterized in that** the pre-lithiation working box is a sealed box body which can be opened and closed or has a removable side.

11. The pre-lithiation apparatus according to claim 1, **characterized in that** the negative electrode busbar is disposed within the box body, and the pre-lithiation working box is provided with an electrode post penetrating a top cover of the box body, and when the top cover is closed, the electrode post is communicated with the negative electrode busbar; or
the negative electrode busbar is disposed outside of the box body, and is communicated with the negative electrode of the battery cell via an electrode post penetrating the box body.

12. The pre-lithiation apparatus according to claim 1, **characterized in that** the tab fixing element is at least one of a clip, a jack catch, a clamping jaw and a fixing plate.

13. A method for collectively pre-lithiating battery cells by using the pre-lithiation apparatus of any one of claims 1 to 12, comprising:
mounting a plurality of battery cells onto the battery cell fixing element, such that a negative electrode of each of the battery cells is connected to the negative electrode busbar;
adding an electrolyte solution through an electrolyte solution injection port to an extent that the battery cells and the lithium source half electrode are all soaked by the electrolyte solution; and
connecting the external power supply and controlling a pre-lithiation amount by controlling a current or a time.

14. A lithium battery, **characterized in that** the lithium battery comprises a pre-lithiated battery cell obtained by the method of claim 13.
